# EUROPÄISCHE PATENTSCHRIFT

(11) **EP 1 163 838 B1**
(45) Veröffentlichungstag und Bekanntmachung des Hinweises auf die Patenterteilung: **31.10.2007**
(21) Anmeldenummer: 01113498.8
(22) Anmeldetag: 02.06.2001
(51) Int. Cl.: A01F 15/10, A01D 89/00

(54) **Erntebergungsmaschine, insbesondere Rundballenpresse**
Crop harvester, especially a rotobaler
Machine de récolte, notamment presse à balles rondes

(30) Priorität: 15.06.2000 US 594251
(43) Veröffentlichungstag der Anmeldung: 19.12.2001
(73) Patentinhaber: DEERE & COMPANY, Moline, Illinois 61265-8098 (US)
(72) Erfinder: Anstey, Henry Dennis, Ottumwa, IA 52501 (US); Derscheid, Daniel Eric, 70100 Gray (FR); Frimml, Roger William, Ottumwa, IA 52501 (US); Engel, Manfred, 66484 Grossteinhausen (DE)
(74) Vertreter: Magin, Ludwig Bernhard

(56) Entgegenhaltungen:
- DE-A- 4 028 349
- DE-U- 29 622 041
- GB-A- 1 042 682
- GB-A- 1 071 658
- US-A- 4 085 571
- US-A- 5 848 523

## Beschreibung

Die Erfindung betrifft eine Erntebergungsmaschine, insbesondere Rundballenpresse, mit einem Rahmen, einem Aufnehmer mit einem Rahmen, und mit einer nachgiebigen Aufhängung zwischen den Rahmen zur Aufnahme wenigstens eines Teils des Gewichts des Aufnehmers, wobei der Aufnehmer eine größere Breite aufweist als der Rahmen der Erntebergungsmaschine und an diesem vertikal schwenkbar angebracht ist.

Der Prospekt "CLAAS Rollant 66 46 Silage 46 Roto Cut", Druckvermerk 8/95 (M+E) dt. 150/190.469.7 offenbart eine Rundballenpresse mit einer sogenannten breiten Pick-up, einem Aufnehmer also, der den Rahmen der Rundballenpresse seitlich überragt. Die Höhe der Pick-up wird von einer Feder beeinflusst, die einenends am Rahmen der Rundballenpresse angelenkt ist und anderenends auf einen Hebelarm wirkt, der auf einer quer zur Rundballenpresse verlaufenden Welle einenends aufgesetzt ist. An dem anderen Ende der Welle ist ebenfalls ein Hebelarm vorgesehen, der über einen Lenker auf den Aufnehmer wirkt.

Aus der GB A 1 042 682 geht eine Presse mit einem Aufnehmer hervor, der so breit ist wie ein anschließend Presskanal und bei dem sich eine Feder zwischen dem Aufnehmer und einem Rahmen der Presse erstreckt, um den Aufnehmer federnd zu lagern. Sobald der Aufnehmer nach unten schwenkt, vergrößert sich sowohl die Federkraft, als auch der Hebelarm zur Schwenkachse des Aufnehmers, was bewirkt das sie leicht nach oben schwingt. Bei einem wesentlich breiteren Aufnehmer könnte die Feder nicht mehr in der vorgesehenen Weise an dem Aufnehmer angeschlossen werden.

Eine Aufhängung gemäß der US A 4 085 571 weist ebenfalls eine Zugfeder auf, greift aber an einem von dem Aufnehmer abstehenden Lager an diesem an und befindet sich nahe an der Schwenkachse des Aufnehmers; mithin sind hohe Federkräfte erforderlich. Wollte man die Federkräfte gering halten, müßte das Lager wesentlich weiter von dem Aufnehmer entfernt angebracht sein, was wiederum viel Bauraum beansprucht.

Bei der Aufhängung nach der DE U 296 22 041 ist eine Hubvorrichtung mit einem Hydraulikzylinder und einer diesen stützenden Druckfeder vorgesehen. Diese Aufhängung befindet sich an der Unterseite des Aufnehmers, was zu einer geringen Bodenfreiheit führt, was aufgrund eines kleinen Momentenarms um das Schwenklager hohe Stell- und Federkräfte erfordert, und was unter Beibehaltung des geringen Momentenarms und des geringen Bauraums keinen großen Schwenkbereich zuläßt.

Das der Erfindung zugrunde liegende Problem wird darin gesehen, daß zum Aufnehmen der Gewichtskraft des Aufnehmers zu viele Teile erforderlich sind, daß sich an der Aufhängung Erntegut ansammeln kann, daß die Aufhängung bei breiten Aufnehmern nicht verwendet werden kann und/oder hohe Federkräfte erforderlich sind.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise ist nur eine Feder und ein Lenker erforderlich, die sich zudem nicht in dem seitlichen und dem Erntegut ausgesetzten Bereich des Aufnehmers, sondern in dessen rückwärtigen und geschützten Bereich befinden, wo es nicht zu Erntegutansammlungen kommt, sodaß insbesondere der Lenker nicht von Erntegut beaufschlagt wird, so daß es nicht zu Gutstaus kommt, die die jeweiligen Bewegungen bremsen oder gar verhindern. Dadurch, daß der Lenker nach der Erfindung den Aufnehmer untergreift, kann er nahe dessen Schwerpunkt angreifen, sodaß hohe Momentenbelastungen in der Aufhängung vermieden werden.

Die Bewegung des Aufnehmers beim Durchfahren von Löchern, Furchen etc. bleibt stets im wesentlichen gleich, wenn die ausgleichende Kraft der jeweiligen Stellung angepasst wird und das jeweilige Haltemoment gleich bleibt. Dies kann auf vielfältige Weise mit Druck- und Zugfedern oder anderen nachgiebigen Elementen, z. B. Gasdruckspeichern, oder dergleichen geschehen, die direkt oder umgelenkt wirken. Dabei ist stets darauf zu achten, daß ein sich vergrößernder Hebelarm mit einer sich verringernden Federkraft und ein sich verkleinernder Hebelarm mit einer sich vergrößernden Federkraft einhergeht.

Eine Anordnung aller Anlenkpunkte unter der Nutzung einer Zugfeder derart, daß sich die Kraftlinien stets zwischen dem Schwerpunkt und dem Schwenkpunkt und daß sich die Anlenkpunkte zu beiden Seiten der Schwenkachse befinden, hat als Konsequenz und Vorteil, daß sich bei einer Bewegung des Aufnehmers der Hebelarm der angreifenden Kraft ändert. Wenn also bei zunehmendem Hebelarm die Federkraft ab- und bei abnehmendem Hebelarm die Federkraft zunimmt, wirkt stets im wesentlichen das gleiche Moment auf den Aufnehmer, ungeachtet seiner Stellung. Bei einer Druckfeder kann das gleiche erreicht werden, wenn die Lage der Kraftlinie verändert wird.

Eine Ausnehmung, z. B. ein Schlitz, ein großes Loch oder dergleichen im Lenker, in dem mit mehr oder weniger Spiel ein mit dem Aufnehmer verbundener Stift, Bolzen, Welle oder dergleichen aufgenommen wird, vermeidet bei der Bewegung des Aufnehmers ein Verklemmen des Lenkers auf dem Stift oder dergleichen, insbesondere, wenn sich der Aufnehmer in sich verdreht, was während des rauhen Betriebs ständig der Fall ist. Die Form des Lenkers als "L" oder "J", d. h. mit einem kurzen und einem langen Schenkel, ermöglicht es auf einfache Weise, unterhalb des Aufnehmers an diesem anzugreifen.

Eine nierenförmige Ausnehmung hat den Vorteil, daß der Stift oder dergleichen nicht mit zuviel Spiel in der Ausnehmung bewegt werden kann, während er in dem geforderten Bewegungsbereich ausreichend Bewegungsfreiraum behält.

Um auch dann noch den Aufnehmer untergreifen zu können, wenn dem Aufnehmer ein Förderer nachgeschaltet ist, der den Durchtritt des Lenkers verhindern würde, ist ein Spalt zwischen den Seitenwänden bzw. den Seitenteilen des Aufnehmers und der Erntebergungsmaschine vorgesehen. Jeder Lenker kann durch diesen Spalt hindurch treten und wird dabei auch von Erntegut abgeschirmt

Die Zahl der erforderlichen Teile kann gering gehalten werden, wenn eine vorhandene Drehachse zugleich als Schwenkachse benutzt wird; dadurch können Lager mehrfach und eine Welle z. B. als Nabe benutzt werden.

Wenn eine Wanne unterhalb des Förderers mehrteilig ausgebildet ist und alleine aufgrund der Hubbewegung des Aufnehmers sich ein Spalt zwischen den beiden Teilen öffnet, können eingetretene Fremdkörper während des Transportbetriebs entfallen und Wasser, z. B. Regenwasser, kann während einer Betriebspause abfliesen; beide Wirkungen vermeiden Korrosion.

In der Zeichnung ist ein nachfolgend näher beschriebenes Ausführungsbeispiel der Erfindung dargestellt. Es zeigt:
- Fig. 1: eine Erntebergungsmaschine mit einem Aufnehmer und einem nachgeordneten Förderer in schematischer und perspektivischer Ansicht von links
- Fig. 2: einen Ausschnitt der Erntebergungsmaschine mit dem Aufnehmer, dem Förderer und einer federnden Aufhängung,
- Fig. 3: eine Detailansicht der drehbar gelagerten Verbindung zwischen der Aufhängung und dem Aufnehmer, und
- Fig. 4: eine Darstellung des Bewegungsablaufes der Federaufhängung während des Betriebs.

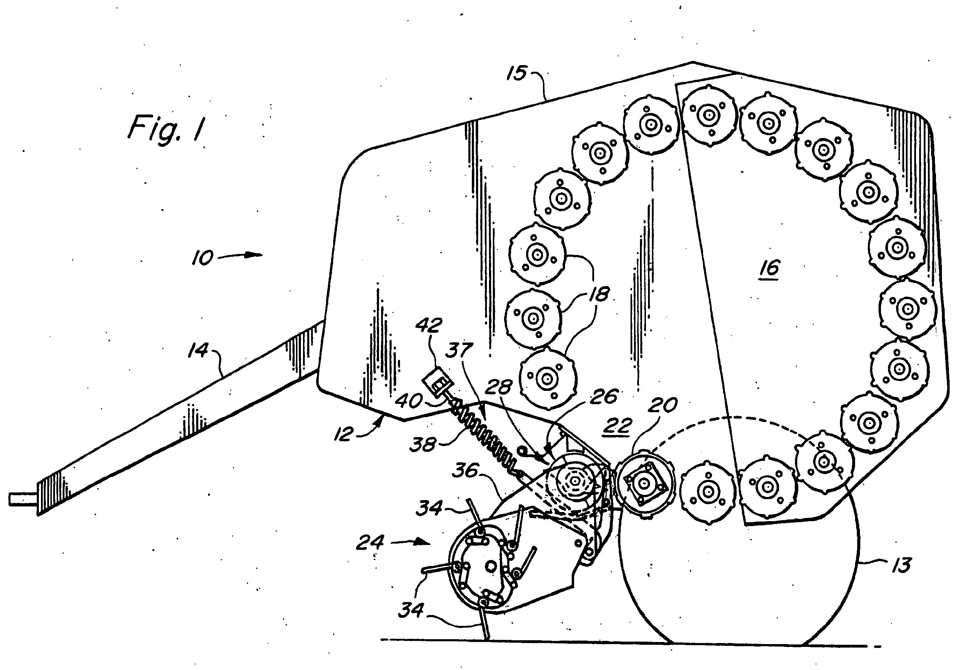

In Figur 1 wird eine Erntebergungsmaschine 10 in der Art einer Rundballenpresse zum Anfertigen großer zylindrischer Ballen gezeigt. Die Erntebergungsmaschine 10 beinhaltet einen von Bodenrädern 13 getragenen hauptsächlichen Rahmen 12, an dessen Vorderseite sich eine Deichsel 14 zur Verbindung mit einem Zugfahrzeug, wie zum Beispiel einem in der Abbildung nicht gezeigten landwirtschaftlichen Traktor, anschließt. Der Rahmen 12 enthält sich gegenüberliegende Seitenwände 15, die eine Vielzahl ballenformender Rollen 18 aufweisen, die sich zwischen diesen erstrecken und in diesen drehbar gelagert sind. Die ballenformenden Rollen 18, die im wesentlichen auf einem Kreis angeordnet sind, wirken mit den Seitenwänden 15 zusammen, um eine Ballenpresskammer 16 von festem Durchmesser zu bilden. Die Mehrzahl der ballenformenden Rollen 18 sind gleichen Durchmessers, wobei eine Rolle eine Bodenrolle 20 darstellt, die einen größeren Durchmesser als die übrigen Rollen 18 besitzt und von einer vorderen der Rollen 18 beabstandet ist, um einen Einlass 22 für die Ballenpreßkammer 16 zu bilden. Es wird durch die nachfolgende Beschreibung verdeutlicht, dass die hier beschriebene Erfindung ebenso bei einer großen Ballenpresse mit einer vergrößerbaren Ballenpresskammer, oder sogar bei anderen landwirtschaftlichen Geräten, die dafür genutzt werden, Prozesse mit auf Schwaden abgelegtem Erntegut durchzuführen, angewendet werden kann.

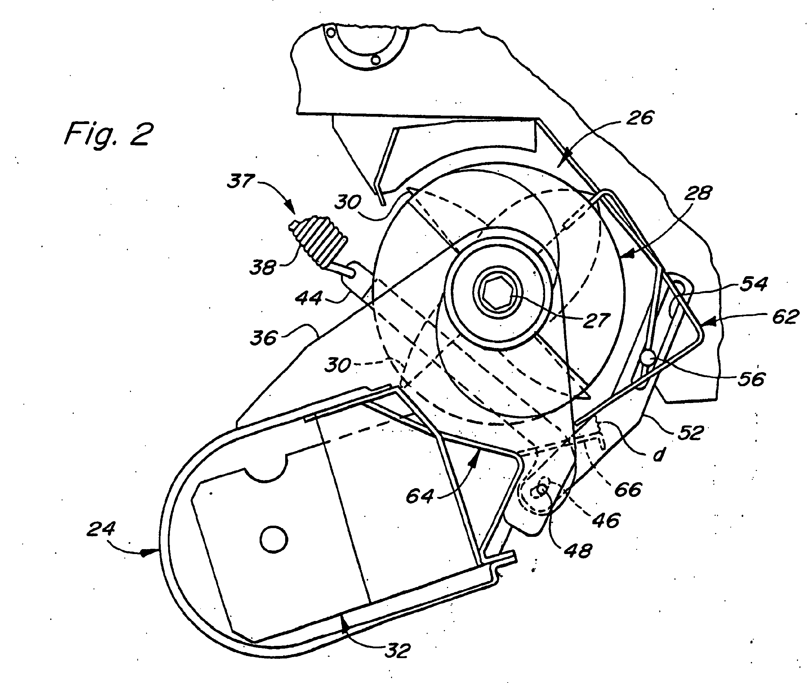

Am vorderen Bereich des Rahmens 12 ist ein Aufnehmer 24 und ein nachfolgender Förderer 26 zum Auflesen von auf Schwaden abgelegtem Erntegut und dessen Förderung zum Einlass 22 angebracht. Der Aufnehmer 24 ist als eine sogenannte breite Pick-up ausgebildet, die eine größere Breite als die Ballenpresskammer 16 aufweist, und die mit dem zusätzlichen Förderer 26 versehen ist, um den eintretenden Strom des Fördergutes auf die Breite der Ballenpresskammer 16 zu verengen, bevor das Erntegut den Einlass 22 erreicht, wobei der Förderer 26 mit rechten und linken Schnecken zum Zusammenführen des Ernteguts ausgestattet ist, von denen hier lediglich die linke Schnecke 28 dargestellt ist. In Figur 2 ist zu sehen, dass eine Mehrzahl starrer Förderfinger 30 in gleichbleibenden Abständen in der Querrichtung zueinander zwischen den Schnecken angebracht sind.

Der Aufnehmer 24 enthält einen Rahmen 32, der eine Zinkenhaspel mit einer Vielzahl von Federzinken 34 beinhaltet, die auf Schwaden abgelegtes Erntegut aufnehmen und den Erntegutstrom nach hinten zum Förderer 26 weiterleiten. Der Rahmen 32 enthält einen Querabstand zueinander aufweisende aufrechte Seitenteile 36, die sich nach oben und hinten hin erstrecken und dazu angebracht sind, um eine drehbare Verbindung herzustellen, die dem Aufnehmer 24 eine vertikale Schwimmbewegung um die Drehachse der Schnecken 28 und der Förderfinger 30 erlauben.

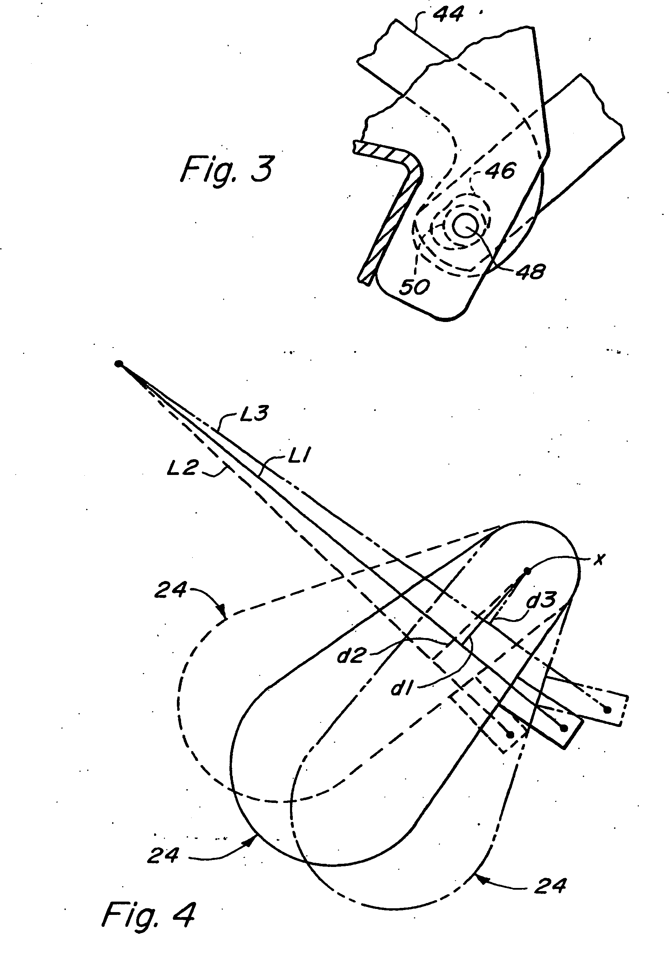

Der Großteil des Gewichtes des Aufnehmers 24 wird von einem Paar Aufhängungen 37 jeweils in einer Schwimmfederanordnung getragen, die im wesentlichen identisch sind, wobei jedoch lediglich die linksseitige Aufhängung 37 dargestellt ist. Jede der Aufhängungen 37 enthält jeweils eine als Schraubenzugfeder ausgebildete Feder 38, deren oberes Ende mit einem Halter 40 zur Aufnahme des Endes der Feder 38 verbunden ist, der von einem an dem Rahmen 12 befestigten Träger 42 gehalten wird. Das untere Ende der Feder 38 endet als Haken, der in einer Aussparung am oberen Endbereich eines längeren Schenkels eines aus einem Flachstahl hergestellten L-förmigen Lenkers 44 aufgenommen wird. Der lange Schenkel des Lenkers 44 erstreckt sich bis hinter den Rahmen 32 in einen Bereich außerhalb einer Wand des Rahmens 12, die die Antriebswelle der linksseitigen Schnecke 28 trägt, und seitlich eines linken Seitenteils 36. In Figur 3 ist zu erkennen, dass der Lenker 44 einen nach vorne gerichteten, kurzen, unteren Endbereich mit einer nierenförmigen Ausnehmung 46 besitzt, deren bogenförmige Oberfläche annähernd auf einem Radius um die Ausnehmung geformt ist, in der der Haken am Ende der Feder 38 aufgenommen wird. An den Seitenteilen 36 ist ein Stift 48 befestigt, der ein festgeklemmtes zylindrisches Verbindungselement 50 trägt, das in der nierenförmigen Ausnehmung 46 zum Ausführen von Bewegungen zwischen den gegenüberliegenden Enden aufgenommen ist. Die nierenförmige Ausnehmung 46 ist so ausgerichtet, dass dem zylindrischen Verbindungselement 50 eine Bewegung entlang der Ausnehmung 46 gestattet wird, anstatt während des Schwimmbetriebs zum Schwenken gezwungen zu werden, wenn die Rundballenpresse 10 unebenes Gelände befährt. Es ist von Bedeutung, dass die Ausnehmung 46 und das Verbindungselement 50 an der rückwärtigen Unterseite des Aufnehmers 24 angebracht sind, da die Arbeitsumgebung in diesem Bereich relativ sauber ist, was auch zu einer freien Bewegung des Verbindungselements 50 innerhalb der Ausnehmung 46 beiträgt, was wiederum den Verschleiß der verbundenen Teile vermindert. Ein Anschlaglenker 52, dessen vorderer Endbereich schwenkbar auf dem Stift 48 angebracht und dessen rückwärtiger Bereich mit einem Langloch oder einem Schlitz 54 versehen ist, der auf einem an dem Rahmen 12 befestigten Stift 56 aufgenommen wird, ist vorgesehen, um eine Anschlagbegrenzung des Aufnehmers 24 nach oben zu bilden. Wird der Aufnehmer 24 nach oben geschwenkt, bewegt sich der Stift 56 zum rückwärtigen Ende der Nut 54.

Es wird hier darauf hingewiesen, dass die Schnecken 28 innerhalb eines Schneckenmuldenzusammenbaus arbeiten, der von einem rückwärtigen und einem vorderen Gehäuseteil 62 bzw. 64 gebildet wird, wobei der rückwärtige Gehäuseteil 62 mit dem Rahmen 12 verbunden ist und der vordere Gehäuseteil 64 einen Teil des Rahmens 32 des Aufnehmers 24 bildet. Ein niedrigerer rückwärtiger Teil 66 des vorderen Gehäuseteils 64 überlappt einen tieferen vorderen Endbereich des rückwärtigen Gehäuseteils 62 und erstreckt sich unter diesen, so daß es dem vorderen Gehäuseteil 64 erlaubt wird, sich gegenüber dem rückwärtigen Gehäuseteil 62 frei zu bewegen, wenn sich der Aufnehmer 24 vertikal bewegt. Es wird hierbei darauf hingewiesen, dass der vordere Gehäuseteil 66 nach oben hin abgewinkelt ist, und zwar von vorne nach hinten, so daß ein Durchfallen/Durchdringen von Erntegutteilchen durch einen Zwischenraums oder Spalt d verhindert wird, der zwischen dem Gehäuseteil 66 und dem rückwärtigen Gehäuseteil 62 gebildet wird, wenn sich der Aufnehmer 24 im normalen Arbeitsbereich befindet, wie dies in Figur 2 dargestellt ist. Wird der Aufnehmer 24 jedoch in eine angehobene Transport-Position gebracht, neigt sich der vordere Gehäuseteil 66 von vorne nach hinten nach unten, so daß Wasser ablaufen kann und Erntegutstücke durch den Zwischenraum d zu Boden fallen können, sodaß die Ansammlung von Feuchtigkeit und/oder Erntegut vermieden wird, die anderenfalls Korrosion und/oder den Verderb von Erntegut verursachen würden, was zu einem erhöhten Reibungswiderstand zwischen der Erntegutbewegung und/oder der Schwenkbewegung des Aufnehmers 24 führen würde.

In Figur 4 wird der Aufnehmer 24 in verschiedenen Stellungen um eine Schwenkachse X dargestellt, die von einer Rotorwelle 27 des nachgeordneten Förderers 26 definiert wird. Im einzelnen wird der Aufnehmer 24 mittels durchgezogener Linien in einer Zwischenbetriebsstellung, in unterbrochenen Linien in einer gänzlich angehobenen Transportstellung und mit Strichpunktlinien in einer abgesenkten Arbeitsstellung gezeigt. Es ist erkennbar, daß die Aktionslinie der Aufhängung 37 bei der mittleren Arbeitsposition entlang der Linie L1 verläuft, was eine Hebelarmlänge d1 zu der Schwenkachse X ergibt. Die Feder 38 würde sich dann in einem Zwischendehnungszustand befinden, um so ein mittleres Maß an Kraft auszuüben. Schwenkt der Aufnehmer 24 in seine Transportstellung hoch, so wird die Feder 38 mehr und mehr zusammengezogen, sodaß sie immer weniger Kraft auf den Aufnehmer 24 ausübt. Zur gleichen Zeit nimmt der Hebelarm auf ein Maximum an Länge d2 zu, wie es der Fall ist, wenn der Aufnehmer 24 seine Transportposition erreicht. Bewegt sich andererseits der Aufnehmer 24 aus der Zwischenstellung nach unten, wird die Feder 38 zunehmend gedehnt, so daß ihre Zugkraft auf den Aufnehmer 24 zunimmt, wobei die Feder 38 eine Wirkkraftlinie L3 einnimmt, wenn sich der Aufnehmer 24 in seiner untersten Stellung befindet. Zur gleichen Zeit verringert sich der Hebelarm bis zu einem minimalen Hebelarm d3, was der Fall ist, wenn der Aufnehmer 24 seine tiefste Stellung erreicht. Die geometrische Beziehung der Befestigungspunkte der Aufhängung 37 zur Schwenkachse X ist so gewählt, daß die Hubkraft, die von der Aufhängung 37 auf den Aufnehmer 24 ausgeübt wird, im wesentlichen das gesamte um die Schwenkachse X wirkende Gewicht des Aufnehmers 24 ausgleicht und über den gesamten Schwimmbereich des Aufnehmers 24 im wesentlichen konstant bleibt. Es ist für einen Fachmann verständlich, daß die spezifischen Schwimmeinstellungen vorgenommen werden müssen, z. B. durch das Verändern der Kräfte auf einer oder beiden Seiten des Aufnehmers 24 oder durch das Verändern der Anlenkungsgeometrie.

## Patentansprüche

1. Erntebergungsmaschine (10), insbesondere Rundballenpresse, mit einem Rahmen (12), einem Aufnehmer (24) mit einem Rahmen (32), und mit einer nachgiebigen Aufhängung (37) zwischen den Rahmen (12, 32) zur Aufnahme wenigstens eines Teils des Gewichts des Aufnehmers (24), wobei der Aufnehmer (24) eine größere Breite aufweist als der Rahmen (12) der Erntebergungsmaschine (10) und an diesem vertikal schwenkbar angebracht ist, **dadurch gekennzeichnet, daß**
a) die Aufhängung (37) eine Feder (38) und einen mit dieser verbundenen Lenker (44) aufweist, wobei die Feder (38) mit dem Rahmen (12) der Erntebergungsmaschine (10) und der Lenker (44) mit dem Rahmen (32) des Aufnehmers (24) verbunden ist und wobei der Lenker (44) den Aufnehmer (24) insbesondere in dem über den Rahmen (12) der Erntebergungsmaschine (10) hinausragenden Bereich untergreift,
b) die Lage der Kraftlinie L1, L2, L3 der Feder (38) mit dem Lenker (44) mit Bezug auf die Schwenkachse "X" des Aufnehmers (24) und die Art der Feder (38) derart gewählt sind, daß das Produkt aus Federkraft und Hebelarm um den Schwenkpunkt "X" bei jeder Stellung des Aufnehmers (24) im wesentlichen konstant ist, und
c) die Feder (38) als eine Zugfeder ausgebildet ist, daß die Schwenkachse "X" des Aufnehmers (24) stets zwischen den Angriffspunkten der Feder (38) und des Lenkers (44) angeordnet ist und sich der Schwerpunkt des Aufnehmers (24) mit Bezug auf die Schwenkachse "X" auf der gleichen Seite befindet wie die Feder (38) und der Lenker (44).

2. Erntebergungsmaschine nach Ansprüch 1, **dadurch gekennzeichnet, daß** der Lenker (44) "L"- oder "J"-förmig ausgebildet ist, wobei sich in einem einen Fußteil bildenden Schenkel des Lenkers (44) eine Ausnehmung (46) befindet, die einen Stift (48) an dem Aufnehmer (24) bzw. an dessen Rahmen (32) mit Spiel aufnimmt.

3. Erntebergungsmaschine nach Anspruch 2, **dadurch gekennzeichnet, daß** die Ausnehmung (46) nierenförmig ausgebildet ist.

4. Erntebergungsmaschine nach einem oder mehreren der vorherigen Ansprüche, **dadurch gekennzeichnet, daß** dem Aufnehmer (24) stromabwärts ein Förderer (26) folgt, der in Seitenwänden (15) der Erntebergungsmaschine (10) drehbar gelagert ist, wobei Seitenteile (36) des Aufnehmers (24) zu diesen mit einem Abstand verlaufen, der einen Durchtritt des Lenkers (44) ermöglicht.

5. Erntebergungsmaschine nach einem oder mehreren der vorherigen Ansprüche, **dadurch gekennzeichnet, daß** die Seitenteile (36) des Aufnehmers (24) um die Drehachse des Förderers (26) schwenkbar sind.

6. Erntebergungsmaschine nach einem oder mehreren der vorherigen Ansprüche, **dadurch gekennzeichnet, daß** der Förderer (26) bodenseitig von einem mehrteiligen Gehäuse (62, 64, 66) umgeben ist, dessen Gehäuseteile (62, 64, 66) sich gegeneinander bewegen können und die in einer angehobenen Stellung des Aufnehmers (24) einen nach unten offenen Spalt "d" bilden.

## Claims

1. Crop harvester (10), in particular a round baler, with a frame (12), a pick-up (24) with a frame (32), and with a flexible suspension (37) between the frames (12, 32) to take up at least a portion of the weight of the pick-up (24), wherein the pick-up (24) has a greater width than the frame (12) of the crop harvester (10) and is mounted on this to pivot vertically, **characterised in that**
a) the suspension (37) has a spring (38) and a link (44) connected to this, wherein the spring (38) is connected to the frame (12) of the crop harvester (10) and the link (44) is connected to the frame (32) of the pick-up (24), and wherein the link (44) engages below the pick-up (24), in particular in the region projecting beyond the frame (12) of the crop harvester (10),
b) the position of the line of force L1, L2, L3 of the spring (38) with the link (44) relative to the pivot axis "X" of the pick-up (24) and the type of spring (38) are selected in such a way that the product of resilient force and leverage around the pivot point "X" is substantially constant in each position of the pick-up (24), and
c) the spring (38) is configured as a tension spring, that the pivot axis "X" of the pick-up (24) is always arranged between the contact points of the spring (38) and the link (44), and the centre of gravity of the pick-up (24) in relation to the pivot axis "X" is located on the same side as the spring (38) and the link (44).

2. Crop harvester according to Claim 1, **characterised in that** the link (44) is configured in an "L" or a "J" shape, wherein a recess (46), which receives a pin (48) on the pick-up (24) or on its frame (32) with play, is located in a leg of the link (44) forming a base part.

3. Crop harvester according to Claim 2, **characterised in that** the recess (46) is kidney-shaped.

4. Crop harvester according to one or more of the preceding claims, **characterised in that** located downstream of the pick-up (24) is a conveyor (26), which is rotatably mounted in side walls (15) of the crop harvester (10), wherein side parts (36) of the pick-up (24) run towards this at a distance, which allows passage of the link (44).

5. Crop harvester according to one or more of the preceding claims, **characterised in that** the side parts (36) of the pick-up (24) are able to pivot around the rotational axis of the conveyor (26).

6. Crop harvester according to one or more of the preceding claims, **characterised in that** the conveyor (26) is surrounded on the base side by a multipart housing (62, 64, 66), the housing parts (62, 64, 66) of which can move relative to one another and which form a downwardly open gap "d" in the raised position of the pick-up (24).

## Revendications

1. Machine de récolte (10), en particulier presse à balles rondes, comportant un cadre (12), un ramasseur (24) avec un cadre (32), et comportant une suspension (37) flexible entre les cadre (12, 32) destinée à absorber au moins une partie du poids du ramasseur (24), ledit ramasseur (24) ayant une largeur supérieure à celle du cadre (12) de la machine de récolte (10) et étant monté de manière pivotante dans le sens vertical contre celui-ci, **caractérisée en ce que** :
a) la suspension (37) comporte un ressort (38) et un bielle (44), le ressort (38) étant assemblé au cadre (12) de la machine de récolte (10) et le bielle (44) étant assemblé au cadre (32) du ramasseur (24), et le bielle (44) s'engageant en dessous du ramasseur (24), en particulier dans la zone s'avançant au-delà du cadre (12) de la machine de récolte (10),
b) la position des lignes de force (L1, L2, L3) du ressort (38) avec le bielle (44) par rapport à l'axe de pivotement (X) du ramasseur (24) et le type de ressort (38) sont choisis de telle sorte que le produit formé par la force de ressort et le bras de levier autour du point de pivotement (X) est sensiblement constant dans chaque position du ramasseur (24), et
c) le ressort (38) est réalisé sous forme de ressort de traction, l'axe de pivotement (X) du ramasseur (24) est toujours disposé entre les points de contact du ressort (38) et du bielle (44) et le centre de gravité du ramasseur (24) se situe par rapport à l'axe de pivotement (X) sur le même côté que le ressort (38) et le bielle (44).

2. Machine de récolte selon la revendication 1, **caractérisée en ce que** le bielle (44) est réalisé en forme de L ou de J, sachant que dans une branche, formant une partie inférieure, du bielle (44) est réalisé un évidement (46), destiné à recevoir avec un jeu un téton (48) réalisé sur le ramasseur (24), ou sur le cadre (32) de celui-ci.

3. Machine de récolte selon la revendication 2, **caractérisée en ce que** l'évidement (46) est réalisé avec une forme réniforme.

4. Machine de récolte selon une ou plusieurs des revendications précédentes, **caractérisée en ce qu'**en aval du ramasseur (24) est monté un convoyeur (26), qui est monté rotatif dans des parois latérales (15) de la machine de récolte (10), des parties latérales (36) du ramasseur (24) étant situées à une distance de celui-ci permettant le passage du bielle (44).

5. Machine de récolte selon une ou plusieurs des revendications précédentes, **caractérisée en ce que** les parties latérales (36) du ramasseur (24) sont aptes à pivoter autour de l'axe de rotation du convoyeur (26).

6. Machine de récolte selon une ou plusieurs des revendications précédentes, **caractérisée en ce que** le convoyeur (26) est entouré au niveau du fond par un carter (62, 64, 66) en plusieurs parties, dont les parties (62, 64, 66) sont mobiles les unes par rapport aux autres et forment une fente (d) ouverte vers le bas lorsque le ramasseur (24) est en position haute.
